(19) **Europäisches Patentamt**
**European Patent Office**
**Office européen des brevets**

(11) **EP 1 873 365 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(51) Int Cl.:
*F01N 3/023* (2006.01)     *F01N 3/08* (2006.01)
*F01N 9/00* (2006.01)      *F02D 41/02* (2006.01)

(21) Anmeldenummer: **07110651.2**

(22) Anmeldetag: **20.06.2007**

(54) **Verfahren zur kombinierten Regeneration eines Partikelfilters und Entschwefelung eines Speicherkatalysators**

Method for combined regeneration of a particulate filter and desulphurisation of a storage catalyst

Procédé destiné à la régénération combinée d'un filtre à particules et de la désulfurisation d'un catalyseur de stockage

(84) Benannte Vertragsstaaten:
**DE FR GB**

(30) Priorität: **26.06.2006 DE 102006029211**

(43) Veröffentlichungstag der Anmeldung:
**02.01.2008 Patentblatt 2008/01**

(73) Patentinhaber: **Ford Global Technologies, LLC Dearborn, MI 48126 (US)**

(72) Erfinder: **Yacoub, Yasser Mohammed Sayed 50858, Köln (DE)**

(74) Vertreter: **Dörfler, Thomas Henry-Ford-Strasse 1 50725 Köln (DE)**

(56) Entgegenhaltungen:
**EP-A1- 1 533 490      EP-A2- 1 174 600
US-A1- 2002 178 716**

EP 1 873 365 B1

## Beschreibung

Die Erfindung betrifft ein Verfahren zur kombinierten Regeneration eines Partikelfilters (DPF) und Entschwefelung eines Speicherkatalysators (LNT), wobei der Partikelfilter und der Speicherkatalysator als kombiniertes Abgasnachbehandlungssystem einer Brennkraftmaschine ausgeführt sind, die mindestens einen Zylinder und mindestens eine Abgasleitung zum Abführen der Abgase aus diesem mindestens einen Zylinder aufweist und bei der das kombinierte Abgasnachbehandlungssystem zur Nachbehandlung des Abgases in der mindestens einen Abgasleitung vorgesehen ist, bei dem

- der Partikelfilter auf eine vorgebbare Temperatur $Tt_{threshold,DPF}$ erwärmt wird, falls die momentane Temperatur $T_{DPF}$ des Partikelfilters kleiner ist als diese vorgegebene Temperatur $T_{threshold,DPF}$ d.h. $T_{DPF} < T_{threshold,DPF}$, und anschließend
- im Rahmen einer Filterregeneration zumindest ein Teil des im Partikelfilter gesammelten Rußes bei einem überstöchiometrischen Betrieb ($\lambda > 1$) der Brennkraftmaschine oxidiert wird, und anschließend
- im Rahmen einer Entschwefelung des LNT das Abgas bei einem unterstöchiometrischen Betrieb ($\lambda < 1$) der Brennkraftmaschine mit nur unvollständig oxidierten Verbrennungsprodukten, insbesondere unverbrannten Kohlenwasserstoffen (HC) und Kohlenmonoxid (CO), angereichert wird, um den im Speicherkatalysator gesammelten und befindlichen Schwefel (S) zu konvertieren.

Nach dem Stand der Technik werden Brennkraftmaschinen zur Reduzierung der Schadstoffemissionen mit verschiedenen Abgasnachbehandlungssystemen ausgestattet. Zwar findet auch ohne zusätzliche Maßnahmen während der Expansion und des Ausschiebens der Zylinderfüllung bei einem ausreichend hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen. Eventueller Sauerstoffmangel kann durch eine Sekundärlufteinblasung kompensiert werden. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Thermische Reaktoren versuchen, eine weitgehende Nachoxidation von HC und CO im Abgassystem zu erzielen, indem eine Wärmeisolation und ein ausreichend großes Volumen im Abgasrohr des Abgassystems vorgesehen werden. Die Wärmeisolation soll ein möglichst hohes Temperaturniveau durch Minimierung der Wärmeverluste sicherstellen, wohingegen ein großes Abgasrohrvolumen eine lange Verweildauer der Abgase gewährleistet. Sowohl die lange Verweildauer als auch das hohe Temperaturniveau unterstützen die angestrebte Nachoxidation. Nachteilig sind der schlechte Wirkungsgrad bei unterstöchiometrischer Verbrennung und die hohen Kosten. Für Dieselmotoren sind thermische Reaktoren aufgrund des grundsätzlich niedrigeren Temperaturniveaus nicht zielführend.

Aus den genannten Gründen kommen nach dem Stand der Technik bei Ottomotoren katalytische Reaktoren zum Einsatz, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb ($\lambda \approx 1$) des Ottomotors erfordert.

Dabei werden die Stickoxide $NO_x$ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuß betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d. h. aufgrund der fehlenden Reduktionsmittel - nicht reduziert werden.

Zur Oxidation der unverbrannten Kohlenwasserstoffe (HC) und von Kohlenmonoxid (CO) wird ein Oxidationskatalysator im Abgassystem vorgesehen. Zur Reduzierung der Stickoxide werden selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe direkt in den Abgastrakt eingebracht werden oder aber durch innermotorische Maßnahmen, beispielsweise durch eine Nacheinspritzung von zusätzlichem Kraftstoff in den Brennraum nach der eigentlichen Verbrennung, zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Brennkraftmaschinen, die von einer Nacheinspritzung Gebrauch machen, sind aber von Hause aus sehr anfällig für eine Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben der Nacheinspritzung nach spät zu. Durch die Veränderung der Schmierstoffeigenschaften des Öls hat die Ölverdünnung maßgeblich Einfluß auf den Verschleiß und die Haltbarkeit d. h. die Lebensdauer der Brennkraftmaschine.

Grundsätzlich können die Stickoxidemissionen auch mit sogenannten Stickoxidspeicherkatalysatoren (**LNT - L**ean NO$_x$ **T**rap**)** reduziert werden, der auch Gegenstand der vorliegenden Erfindung ist.

Dabei werden die Stickoxide zunächst - während eines mageren Betriebs der Brennkraftmaschine - im Katalysator absorbiert d. h. gesammelt und gespeichert, um dann während einer Regenerationsphase (deNO$_x$) beispielsweise mittels eines unterstöchiometrischen Betriebs (beispielsweise λ < 0,95) der Brennkraftmaschine bei Sauerstoffmangel reduziert zu werden, wobei die unverbrannten Kohlenwasserstoffe als Reduktionsmittel dienen. Weitere innermotorische Möglichkeiten zur Anreicherung des Abgases bietet die Abgasrückführung (AGR) und - bei Dieselmotoren - die Drosselung im Ansaugtrakt. Wie bereits für die SCR-Katalysatoren weiter oben ausgeführt, kann eine Anreicherung des Abgases mit unverbrannten Kohlenwasserstoffen auch mittels Nacheinspritzung von Kraftstoff realisiert werden, was ebenfalls als innermotorische Maßnahme anzusehen ist. Die Nachteile dieser Vorgehensweise sind die bereits oben Genannten, insbesondere die Ölverdünnung.

Auf innermotorische Maßnahmen kann verzichtet werden, wenn das Reduktionsmittel direkt in den Abgastrakt eingebracht wird, beispielsweise durch Einspritzen von zusätzlichem Kraftstoff. Während der Regenerationsphase werden die Stickoxide freigegeben und im wesentlichen in Stickstoffdioxid (N$_2$), Kohlenstoffdioxid (CO$_2$) und Wasser (H$_2$O) umgewandelt.

Die US 2002/0178716 A1 beschreibt ein Verfahren zur Reinigung d.h. Regeneration eines Speicherkatalysators, wobei dieser Speicherkatalysator stromabwärts eines Oxidationskatalysators angeordnet wird. Dabei wird ein flüssiges Reduktionsmittel stromaufwärts des Oxidationskatalysators in den Abgasstrom eingebracht. Ein Teil des Reduktionsmittels wird anschließend beim Durchströmen des Oxidationskatalysators im Rahmen einer exothermen Reaktion oxidiert, wodurch der verbleibende Anteil an Reduktionsmittel verdampft wird. Das auf diese Weise aufbereitete d.h. verdampfte Reduktionsmittel wird dann dem stromabwärts vorgesehenen Speicherkatalysator zugeführt und dient der Reinigung d.h. der Reduzierung der Stickoxide (NO$_x$).

Die Häufigkeit der Regenerationsphasen wird durch die Gesamtemission an Stickoxiden und die Speicherkapazität des LNT bestimmt. Nach dem Stand der Technik wird der Speicherkatalysator regelmäßig d. h. in fest vorgegebenen Abständen, in der Regel bei Erreichen einer vorgegebenen Fahrleistung bzw. Betriebsdauer, regeneriert d.h. gereinigt. Alternativ kann eine rechnerisch abgeschätzte Beladung des LNT als Entscheidungskriterium herangezogen werden. Bezüglich der Nachteile dieser Vorgehensweise wird auf die weiter unten beschriebene Entschwefelung verwiesen. Die Temperatur des Speicherkatalysators (LNT) sollte vorzugsweise in einem Temperaturfenster zwischen 200°C und 450°C liegen, so daß einerseits eine schnelle Reduktion sichergestellt wird und andererseits keine Desorption ohne Konvertierung der wieder freigegebenen Stickoxide stattfindet, was durch zu hohe Temperaturen ausgelöst werden kann.

Eine Schwierigkeit bei der Verwendung des LNT im Abgastrakt ergibt sich aus dem im Abgas enthaltenen Schwefel, der ebenfalls im LNT absorbiert wird und im Rahmen einer sogenannten Desulfurisation (deSO$_x$) d. h. einer Entschwefelung (deSO$_x$) regelmäßig entfernt werden muß. Hierfür muß der LNT auf hohe Temperaturen, üblicherweise zwischen 600°C und 700 °C, erwärmt und mit einem Reduktionsmittel versorgt werden, was wiederum durch den Übergang zu einem fetten Betrieb der Brennkraftmaschine erreicht werden kann. Hinsichtlich der Anreicherung des Abgases mit Reduktionsmittel wird auf die bereits weiter oben - im Zusammenhang mit dem SCR-Katalysator bzw. dem LNT - gemachten Ausführungen Bezug genommen.

Nach dem Stand der Technik wird die Entschwefelung des Speicherkatalysators regelmäßig d. h. in fest vorgegebenen Abständen, in der Regel bei Erreichen einer vorgegebenen Fahrleistung bzw. Betriebsdauer, durchgeführt. Diese Vorgehensweise ist aber nicht bedarfsgerecht, da unabhängig von der tatsächlichen Notwendigkeit - einer Kontamination des LNT mit Schwefel - eine Entschwefelung durchgeführt wird. Die Durchführung einer nicht erforderlichen Entschwefelung führt zu einem erhöhten Kraftstoffverbrauch, denn es muß berücksichtigt werden, daß die Erwärmung des LNT und gegebenenfalls die Anreicherung des Abgases mit Reduktionsmittel unter Einsatz von zusätzlichem Kraftstoff erfolgt. Unter ökonomischen Gesichtspunkten ist daher die beschriebene Vorgehensweise als nachteilig anzusehen; insbesondere, da die Reduzierung des Kraftstoffverbrauchs ein primäres Ziel in der Entwicklung darstellt.

Darüber hinaus können die für eine Entschwefelung erforderlichen hohen Temperaturen den Speicherkatalysator schädigen, zur thermischen Alterung des Katalysators beitragen und die gewollte Konvertierung der Stickoxide gegen Ende seiner Lebensdauer nachteilig beeinflussen. Insbesondere sollte beim Betrieb des Speicherkatalysators die Temperatur $T_{LNT}$ des LNT eine bestimmte Grenztemperatur $T_{LNT,limited}$ nicht überschreiten.

Alternativ kann auch die tatsächliche Beladung des LNT mit Schwefel mittels rechnerischer Modelle abgeschätzt werden und eine Entschwefelung bei Erreichen einer zulässigen maximalen Beladung, die vorzugeben ist, durchgeführt werden. Dies reduziert zwar die Anzahl der vorgenommen Entschwefelungsprozesse auf die tatsächlich notwendige Anzahl an Entschwefelungen. Die hohe Kontamination des LNT mit Schwefel erfordert aber einen vergleichsweise lange dauernden Entschwefelungsprozeß d. h. hohe Temperaturen über vergleichsweise lange Zeiten.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration (deSoot) des Filters intermittierend verbrannt werden. Hierzu ist Sauerstoff bzw. ein Luftüberschuß im Abgas erforderlich, um den Ruß im Filter zu oxidieren, was beispielsweise durch einen überstöchiometrischen Betrieb ($\lambda > 1$) der Brennkraftmaschine erreicht werden kann.

Nach dem Stand der Technik wird der Filter regelmäßig d.h. in fest vorgegebenen Abständen, in der Regel bei Erreichen einer vorgegebenen Fahrleistung bzw. Betriebsdauer, regeneriert. Alternativ kann auch die tatsächliche Beladung des Filters mit Ruß mittels rechnerischer Modelle oder durch Messung des Abgasgegendrucks, der sich infolge des zunehmenden Strömungswiderstandes des Filters aufgrund der anwachsenden Partikelmasse im Filter einstellt, abgeschätzt werden, wobei eine Regeneration bei Erreichen einer zulässigen maximalen Beladung, die vorzugeben ist, durchgeführt wird.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muß auf zusätzliche Maßnahmen zurückgegriffen werden, um eine Regeneration des Filters unter allen Betriebsbedingungen zu gewährleisten.

Die Erwärmung des Partikelfilters kann durch Nacheinspritzung von zusätzlichem Kraftstoff in den Brennraum erfolgen, wobei der nacheingespritzte Kraftstoff bereits im Brennraum gezündet wird, was durch die auslaufende Hauptverbrennung oder die gegen Ende der Verbrennung im Brennraum vorliegenden hohen Temperaturen geschehen kann, so daß die Abgastemperatur der in den Abgastrakt ausgeschobenen Abgase innermotorisch angehoben wird. Zur Erwärmung des Abgases und damit des Filters kann die Brennkraftmaschine auch unterstöchiometrisch ($\lambda < 1$) betrieben werden, was ebenfalls als innermotorische Maßnahme anzusehen ist.

Auch im Zusammenhang mit der Regeneration des Partikelfilters muß berücksichtigt werden, daß der Einsatz von zusätzlichem Kraftstoff, sei es aufgrund eines Überganges zu einem fetten Motorbetrieb oder aber infolge der Nacheinspritzung von Kraftstoff zwecks Erwärmung, prinzipbedingt den Kraftstoffverbrauch der Brennkraftmaschine nachteilig beeinflußt. Insbesondere die Häufigkeit, mit der der Partikelfilter regeneriert wird, und die Dauer der Filterregeneration haben maßgeblichen und direkten Einfluß auf die zu diesen Zwecken eingesetzte Kraftstoffmenge und damit auf den Gesamtverbrauch.

Da sowohl die Abgase von Ottomotoren als auch die Abgase von Dieselmotoren - wenn auch in unterschiedlichen Mengen und Qualitäten - unverbrannte Kohlenwasserstoffe (HC), Kohlenmonoxid (CO), Stickoxide ($NO_x$) als auch Rußpartikel enthalten, kommen nach dem Stand der Technik in der Regel kombinierte Abgasnachbehandlungssysteme zum Einsatz, die einen oder mehrere der oben beschriebenen Katalysatoren, Reaktoren und/oder Filter umfassen.

Gegenstand der vorliegenden Erfindung ist nun ein kombiniertes Abgasnachbehandlungssystem mit einem Speicherkatalysator (LNT) und einem Partikelfilter (DPF) als Abgasnachbehandlungskomponenten.

Die einzelnen Komponenten des kombinierten Abgasnachbehandlungssystems d.h. der Speicherkatalysator und der Partikelfilter können als separate Komponenten ausgebildet sein, wobei sowohl für den Speicherkatalysator als auch für den Partikelfilter ein eigenes Trägersubstrat vorgesehen ist. Dabei sind die beiden Trägersubstrate entweder beabstandet zueinander oder zusammenhängend ausgebildet und der Speicherkatalysator in der Regel stromaufwärts des Partikelfilters angeordnet. Alternativ kann als Partikelfilter beispielsweise ein Wabenfilter dienen, der gleichzeitig als Trägersubstrat zur Ausbildung eines Speicherkatalysators verwendet wird.

Der Partikelfilter erreicht seine Regenerationstemperatur von 550°C üblicherweise nicht während des normalen mageren Motorenbetriebs. Die im Speicherkatalysator ablaufenden Reaktionen sind aber mit einer - wenn auch geringen - Wärmeabgabe verbunden und führen auf diese Weise zu einer Erhöhung der Abgastemperatur und der Temperatur des Partikelfilters.

Jedoch findet auch bei niedrigeren Temperaturen eine Regeneration, die sogenannte passive Regeneration, des Filters statt, bei der im Abgas befindliche Stickoxide ($NO_x$) den Sauerstoff für die Oxidation d.h. die Verbrennung der im Filter gespeicherten Rußpartikel liefern, wobei im wesentlichen Stickstoffmonoxid (NO) und Kohlenmonoxid (CO) gebildet wird.

Das gleichzeitige Betreiben und Steuern des Speicherkatalysators und des Partikelfilters führt unter Umständen zu Konflikten, da diese beiden Abgasnachbehandlungskomponenten verschiedene und teilweise entgegenstehende Randbedingungen bzw. Betriebsparameter der Brennkraftmaschine erfordern. Beide Komponenten erfordern eine hohe Temperatur und zwar der Filter für eine Regeneration und der LNT für eine Entschwefelung. Die Anforderungen an das Luftverhältnis $\lambda$ divergieren dabei aber. Während der Filter Sauerstoff d.h. einen Luftüberschuß und damit einen überstöchiometrischen Betrieb ($\lambda > 1$) der Brennkraftmaschine erfordert, um den Ruß zu oxidieren, verlangt die Entschwefelung des LNT die Anreicherung des Abgases mit Reduktionsmittel und damit einen unterstöchiometrischen

($\lambda$ < 1) Betrieb der Brennkraftmaschine.

Vorteilhaft ist es, den Betrieb der beiden Abgasnachbehandlungskomponenten in der Art aufeinander abzustimmen, daß sich Synergieeffekte ergeben, was sich insbesondere bei der Erwärmung der beiden Komponenten anbietet.

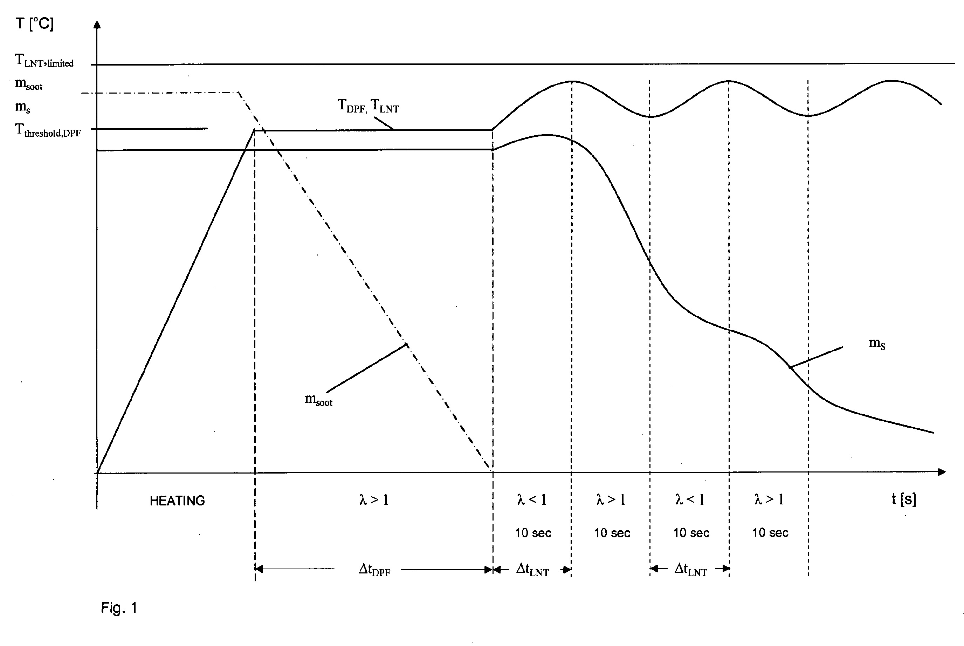

Figur 1 zeigt die aus dem Stand der Technik bekannte Abstimmung der Komponenten bei der Entschwefelung des Speicherkatalysators (LNT) und der Regeneration des Filters (DPF). Auf der Ordinate ist die Temperatur $T_{DPF}$ bzw. $T_{LNT}$, die Rußbeladung des Filters $m_{soot}$ und die Schwefelmenge $m_s$ im Speicherkatalysator aufgetragen. Die Abszisse dient als Zeitachse.

Zunächst wird eine Erwärmung (HEATING) des Systems eingeleitet und durchgeführt bis eine für die Filterregeneration erforderliche Mindesttemperatur $T_{threshold,DPF}$ erreicht ist. Dies kann beispielsweise durch einen unterstöchiometrischen Betrieb ($\lambda$ < 1) der Brennkraftmaschine erfolgen. Während eines unterstöchiometrischen Betriebs ($\lambda$ < 1) der Brennkraftmaschine sorgt die hohe Konzentration an unverbrannten Kohlenwasserstoffen im Abgas für eine spürbare Anhebung der Abgastemperatur infolge der verstärkten Oxidationsprozesse, die in einem in der Abgasleitung vorgesehenen Oxidationskatalysator ablaufen. Dabei wird die Wärme dort freigesetzt, wo sie benötigt wird, nämlich benachbart zu den Abgasnachbehandlungskomponenten.

Anschließend wird - mit dem Zweck einer Filterregeneration - der im Partikelfilter gesammelte Ruß bei einem überstöchiometrischen Betrieb $\lambda$ > 1) der Brennkraftmaschine oxidiert. Die Rußverbrennung ist ein exothermer chemischer Prozess, weshalb die zuvor im Rahmen der Erwärmung realisierte Temperatur - wie dargestellt - aufrechterhalten wird.

Während der Regeneration nimmt die Beladung des Filters ab, wobei in Figur 1 vereinfachend von einer linearen Abnahme der Rußmasse $m_{soot}$ ausgegangen wird. Tatsächlich sind die Regenerationsraten bei hohen Beladungen größer als bei geringeren Beladung, weshalb die Kurve einer Hyperbel ähnlich verlaufen müßte.

Nach erfolgter Filterregeneration wird - mit dem Zweck einer Entschwefelung des LNT - das Abgas bei einem unterstöchiometrischen Betrieb ($\lambda$ < 1) der Brennkraftmaschine mit nur unvollständig oxidierten Verbrennungsprodukten, insbesondere unverbrannten Kohlenwasserstoffen (HC) und Kohlenmonoxid (CO), angereichert, um den im Speicherkatalysator gesammelten und befindlichen Schwefel (S) zu konvertieren.

Weil während des unterstöchiometrischen Betriebs ($\lambda$ < 1) der Brennkraftmaschine im Rahmen der im LNT ablaufenden Reduktionsprozesse Schwefelsäure ($H_2S$) gebildet wird, Schwefelsäure toxisch ist und daher strenge Grenzwerte einzuhalten sind, wird die Brennkraftmaschine zur intermittierenden Anreicherung des Abgases abwechselnd unterstöchiometrisch ($\lambda$ < 1) und überstöchiometrisch ($\lambda$ > 1) betrieben, so daß die sauerstoffarmen fetten Betriebsphasen der Brennkraftmaschine jeweils von einer sauerstoffreichen mageren Betriebsphase unterbrochen werden. Durch diese Maßnahme kann die Konzentration an Schwefelsäure ($H_2S$) im Abgas begrenzt werden.

Die sauerstoffarmen fetten Betriebsphasen der Brennkraftmaschine und die sauerstoffreichen mageren Betriebsphasen der Brennkraftmaschine sind dabei von gleicher Länge - vorliegend 10 Sekunden - und werden im Verlauf der Entschwefelung auch nicht variiert.

Vor dem Hintergrund des zuvor Gesagten ist es die Aufgabe der vorliegenden Erfindung, ein Verfahren gemäß dem Oberbegriff des Anspruchs 1 aufzuzeigen, mit dem ein kombiniertes Abgasnachbehandlungssystem der in Rede stehenden Art möglichst vorteilhaft, insbesondere hinsichtlich der Regeneration des Partikelfilters und der Entschwefelung des Speicherkatalysators, betrieben werden kann.

Gelöst wird diese Aufgabe durch ein Verfahren zur kombinierten Regeneration eines Partikelfilters (DPF) und Entschwefelung eines Speicherkatalysators (LNT), wobei der Partikelfilter und der Speicherkatalysator als kombiniertes Abgasnachbehandlungssystem einer Brennkraftmaschine ausgeführt sind, die mindestens einen Zylinder und mindestens eine Abgasleitung zum Abführen der Abgase aus diesem mindestens einen Zylinder aufweist und bei der das kombinierte Abgasnachbehandlungssystem zur Nachbehandlung des Abgases in der mindestens einen Abgasleitung vorgesehen ist, bei dem

- der Partikelfilter auf eine vorgebbare Temperatur $T_{threshold,DPF}$ erwärmt wird, falls die momentane Temperatur $T_{DPF}$ des Partikelfilters kleiner ist als diese vorgegebene Temperatur $T_{threshold,DPF}$ d.h. $T_{DPF}$ < $T_{threshold,DPF}$, und anschließend
- im Rahmen einer Filterregeneration zumindest ein Teil des im Partikelfilter gesammelten Rußes bei einem überstöchiometrischen Betrieb ($\lambda$ > 1) der Brennkraftmaschine oxidiert wird, und anschließend
- im Rahmen einer Entschwefelung des LNT das Abgas bei einem unterstöchiometrischen Betrieb ($\lambda$ < 1) der Brennkraftmaschine mit nur unvollständig oxidierten Verbrennungsprodukten, insbesondere unverbrannten Kohlenwasserstoffen (HC) und Kohlenmonoxid (CO), angereichert wird, um den im Speicherkatalysator gesammelten und befindlichen Schwefel (S) zu konvertieren, und das dadurch gekennzeichnet ist, daß
- der zur Entschwefelung eingeleitete unterstöchiometrische Betrieb ($\lambda$ < 1) der Brennkraftmaschine für eine vorgegebene Zeitspanne $\Delta t_{LNT}$ aufrechterhalten wird, wobei diese Zeitspanne $\Delta t_{LNT}$ als Funktion einer Schwefelumwandlungsrate $dm_s/dt$ vorgegeben wird d. h. $\Delta t_{LNT} = f(dm_s/dt)$.

Vorteilhaft sind dabei Ausführungsformen des Verfahrens, bei denen

- der zur Filterregeneration eingeleitete überstöchiometrische Betrieb ($\lambda > 1$) der Brennkraftmaschine für eine vorgegebene Zeitspanne $\Delta t_{DPF}$ aufrechterhalten wird, wobei diese Zeitspanne $\Delta t_{DPF}$ als Funktion einer Filterregenerationsrate $dm_{soot}/dt$ vorgegeben wird d.h. $\Delta t_{DPF =} f (dm_{soot}/dt)$.

Gemäß dem erfindungsgemäßen Verfahren werden die Regeneration des Partikelfilters und die Entschwefelung des Speicherkatalysators kombiniert durchgeführt. Dabei ergeben sich in vorteilhafter Weise Synergieeffekte, da beide Maßnahmen eine ausreichend hohe Temperatur des kombinierten Abgasnachbehandlungssystems erfordern. Erfindungsgemäß wird die für die Erwärmung des Abgasnachbehandlungssystems eingesetzte Energie - beispielsweise der benötigte Kraftstoff bei unterstöchiometrischem Betrieb ($\lambda < 1$) der Brennkraftmaschine - effizient, nämlich sowohl für die Regeneration als auch für die Entschwefelung, genutzt.

Wird beispielsweise in einem ersten Schritt der Partikelfilter während eines überstöchiometrischen Betriebs ($\lambda < 1$) der Brennkraftmaschine - beispielsweise auf etwa 550°C - erwärmt und anschließend regeneriert, führt die im Partikelfilter ablaufende Oxidation der Rußpartikel zu einer Aufrechterhaltung - gegebenenfalls zu einem Anstieg - der im Rahmen der Erwärmung realisierten Temperatur im Abgasnachbehandlungssystem. Wird berücksichtigt, daß die Entschwefelung ebenfalls hohe Temperaturen, von 600°C bis 700°C erfordert, wird ersichtlich, daß bei Einsatz des erfindungsgemäßen Verfahrens eine separate Erwärmung des Speicherkatalysators zum Zweck einer Entschwefelung in der Regel nicht erforderlich ist.

Vorteilhafterweise wird für die Filterregeneration keine feste d.h. keine unveränderliche, konstante Zeitspanne vorgegeben. Vielmehr wird die Dauer $\Delta t_{DPF}$ für den überstöchiometrischen Betrieb der Brennkraftmaschine, der zur Regeneration des Filters eingeleitet wird, in Abhängigkeit von der jeweils momentan vorliegenden Regenerationsrate $dm_{soot}/dt$ festgelegt, wobei die Regenerationsphasen $\Delta t_{DPF}$ bei hohen Regenerationsraten in der Regel länger gewählt werden sollten, um eine hohe Regenerationsrate für eine möglichst lange Zeit $\Delta t_{DPF}$ nutzen zu können.

Dadurch wird eine effiziente Regeneration des Filters realisiert. Erfahrungsgemäß wird bei großen Beladungen des Filters vergleichsweise viel Ruß in einer vergleichsweise kurzen Zeit oxidiert, wobei die Regenerationsraten mit abnehmender Beladung ebenfalls abnehmen. D.h. bei hohen Beladungen kann mit vergleichsweise wenig Aufwand vergleichsweise schnell eine große Menge des im Filter gesammelten Rußes verbrannt werden, wohingegen infolge der niedrigen Regenerationsraten bei kleinen Filterbeladungen eine Tiefenregeneration des Filters einen lange fortdauernden überstöchiometrischen Betrieb der Brennkraftmaschine erfordert.

Sind die momentanen Regenerationsraten vergleichsweise niedrig, kann im Sinne einer möglichst ökonomischen Vorgehensweise die Zeitspanne $\Delta t_{DPF}$ kurz bemessen werden, da infolge der niedrigen Regenerationsraten nur wenig Ruß oxidiert wird und somit ein Abbruch der Filterregeneration nur eine unwesentlich höhere Beladung des Filters bedingt als wenn der Filter unter Ausnutzung der niedrigen Regenerationsraten weiter regeneriert wird und der Betrieb der Brennkraftmaschine durch den zur Regeneration erforderlichen überstöchiometrischen Betrieb fortgesetzt eingeschränkt wird.

Der Partikelfilter kühlt sich zudem mit fortschreitender Zeit bei nur niedrigen Regenerationsraten, also niedrigen Rußumsatz- d. h. Oxidationsraten, weiter ab, wobei die Filtertemperatur mehr oder weniger schnell unter die notwendige Regenerationstemperatur $T_{threshold,DPF}$ sinkt, bei der die Oxidation des Rußes vollständig zum Erliegen kommen kann.

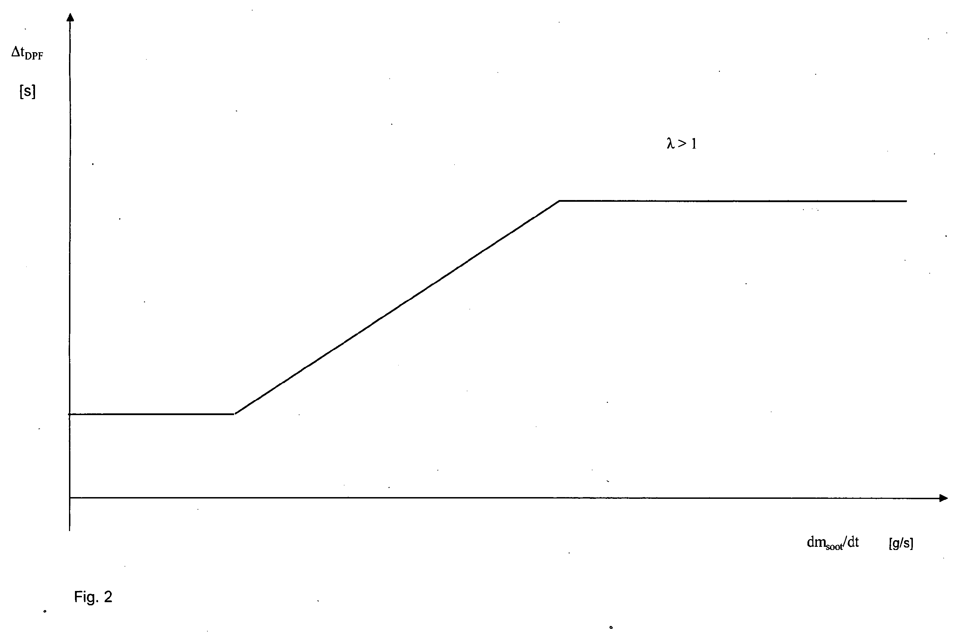

Figur 2 gibt beispielhaft einen möglichen funktionalen Zusammenhang zwischen der vorzugebenden Zeitspanne $\Delta t_{DPF}$ und der momentanen Filterregenerationsrate $dm_{soot}/dt$ wieder, der im Rahmen der beschriebenen Vorgehensweise Verwendung finden könnte.

Gemäß dem erfindungsgemäßen Verfahren wird bei der Bemessung der Zeitspanne $\Delta t_{LNT}$ zur Entschwefelung des Speicherkatalysators in analoger Weise - wie zuvor für den Partikelfilter beschrieben - vorgegangen d. h. die Zeitspanne ist grundsätzlich variabel gestaltet und im Rahmen des erfindungsgemäßen Verfahrens keine fest vorgegebene Zeitkonstante wie bei herkömmlichen, aus dem Stand der Technik bekannten Verfahren.

Die Zeitspanne $\Delta t_{LNT}$ wird dabei als Funktion der momentanen Schwefelumwandlungsrate $dm_S/dt$ im LNT festgelegt. Es gilt:

$$\Delta t_{LNT} = f (dm_s/dt)$$

Die Festlegung der Entschwefelungsdauer $\Delta t_{LNT}$ für jedes konkrete Einzelereignis führt zu einem - unter ökonomischen Aspekten - optimierten Entschwefelungsprozess. Hohe Konvertierungsraten bezüglich des im LNT gespeicherten Schwefels (S) sollen für eine möglichst effektive d.h. schnelle Entschwefelung des LNT genutzt werden, weshalb die Brennkraftmaschine bei hohen Konvertierungsraten möglichst lange unterstöchiometrisch betrieben werden soll. Anstelle der momentanen Umwandlungsrate kann auch eine zukünftige, vorherbestimmte - beispielsweise mittels Rechenmodell ermittelte - Umwandlungsrate verwendet werden.

Eine Beschränkung stellt dabei die infolge des unterstöchiometrischen Betriebes der Brennkraftmaschine ansteigende Temperatur des Speicherkatalysators dar, die eine vorgegebene Grenztemperatur $T_{LNT,limited}$ nicht überschreiten sollte, um den LNT nicht thermisch zu beschädigen oder in seiner Effizienz zu beeinträchtigen, wobei der Temperaturanstieg im Rahmen der Abgasanreicherung ($\lambda < 1$) - zumindest anfangs - auch Vorteile hat, denn in der Regel liegt die für eine Entschwefelung erforderliche Temperatur $T_{LNT}$ des LNT - 600°C bis 700°C - über der Regenerationstemperatur des Partikelfilters von etwa 550°C.

Dadurch wird die der Erfindung zugrunde liegende Aufgabe gelöst, nämlich ein Verfahren gemäß dem Oberbegriff des Anspruchs 1 aufzuzeigen, mit dem eine Kombination aus Speicherkatalysator und Partikelfilter möglichst vorteilhaft, insbesondere hinsichtlich der Regeneration des Partikelfilters und der Entschwefelung des Speicherkatalysators, betrieben werden kann.

Weitere vorteilhafte Verfahrensvarianten gemäß den Unteransprüchen werden im folgenden erläutert.

Vorteilhaft sind Ausführungsformen des Verfahrens, bei denen die Konzentration der während der Entschwefelung gebildeten Schwefelsäure ($H_2S$) bei der Bemessung der vorgegebenen Zeitspanne $\Delta t_{LNT}$ berücksichtigt wird d.h. $\Delta t_{LNT} = f(H_2S)$.

Wie bereits in der Beschreibungseinleitung ausgeführt, wird im Rahmen des Entschwefelungsprozesses - ausreichend hohe Temperaturen im LNT vorrausgesetzt - während des unterstöchiometrischen Betriebs ($\lambda < 1$) der Brennkraftmaschine Schwefelsäure ($H_2S$) im LNT gebildet, wohingegen bei einem überstöchiometrischen Betrieb ($\lambda > 1$) der Brennkraftmaschine d. h. bei einem Sauerstoffüberschuß vorwiegend Schwefeldioxid ($SO_2$) gebildet wird. Da Schwefelsäure toxisch ist, sollte die Konzentration der Schwefelsäure im Abgas limitiert werden, was beispielsweise gemäß der in Rede stehenden Ausführungsform durch eine Berücksichtigung der infolge der Entschwefelung gebildeten Schwefelsäure ($H_2S$) bei der Festlegung der Zeitspanne $\Delta t_{LNT}$ erfolgen kann.

Aus den genannten Gründen sind auch Varianten des Verfahrens vorteilhaft, bei denen im Rahmen der Entschwefelung intermittierend zwischen einem überstöchiometrischen Betrieb ($\lambda > 1$) und einem unterstöchiometrischen Betrieb ($\lambda < 1$) der Brennkraftmaschine gewechselt wird. Die Konzentration an Schwefelsäure ($H_2S$) im Abgas der Brennkraftmaschine kann dabei während des überstöchiometrischen Betriebs der Brennkraftmaschine abgebaut werden, so daß ein Grenzwert für die maximal zulässige Konzentration an Schwefelsäure im Abgas nicht überschritten wird. Der intermittierende Betrieb der Brennkraftmaschine führt zu einem wellenförmigen Konzentrationsverlauf an Schwefelsäure im Abgas.

Vorteilhafterweise werden also die sauerstoffarmen Betriebsphasen der Brennkraftmaschine jeweils von einer sauerstoffreichen Betriebsphase unterbrochen. Die sauerstoffarmen Betriebsphasen der Brennkraftmaschine und die sauerstoffreichen Betriebsphasen der Brennkraftmaschine können von unterschiedlicher Länge sein und darüber hinaus variiert werden.

Vorteile bietet der intermittierende Betrieb der Brennkraftmaschine auch hinsichtlich der im LNT vorliegenden Temperatur. Bei einem überstöchiometrischen Betrieb der Brennkraftmaschine wird nicht nur die Konzentration an Schwefelsäure ($H_2S$) im Abgas reduziert und damit begrenzt. Der überstöchiometrische Betrieb verursacht auch einen Temperaturabfall im LNT, so daß ein Überschreiten einer maximal zulässigen Temperatur d.h. eines vorgegebenen Grenzwertes $T_{LNT,limited}$ nicht zu befürchten ist. Analog zum wellenförmigen Konzentrationsverlauf an Schwefelsäure im Abgas ergibt sich aufgrund des intermittierenden Betriebs der Brennkraftmaschine ein pulsierender Temperaturverlauf im LNT.

Ein derartiger Betrieb der Brennkraftmaschine kann auch Vorteile bezüglich der im Abgas der Brennkraftmaschine vorliegenden Methankonzentration ($CH_4$) bieten, was weiter unten noch näher ausgeführt werden wird. Des weiteren gewährleistet der intermittierende Betrieb der Brennkraftmaschine die Bereitstellung des für die Oxidation von unverbrannten Kohlenwasserstoffen notwendigen Sauerstoffes während der überstöchiometrischen Phasen, so daß die während des unterstöchiometrischen Betriebs in die Abgasleitung ausgeschobenen Kohlenwasserstoffe ohne weiteres in einem in der Abgasleitung vorgesehenen Oxidationskatalysator oxidiert werden können.

Aufgrund des zuvor Gesagten sind auch Varianten des Verfahrens vorteilhaft, bei denen die Entschwefelung des LNT beendet wird, sobald die Konzentration der während der Entschwefelung gebildeten Schwefelsäure ($H_2S$) im Abgas einen vorgebbaren Grenzwert $(H_2S)_{limited}$ überschreitet. Im Gegensatz zu dem zuvor beschriebenen intermittierenden Betrieb der Brennkraftmaschine wird die Entschwefelung nicht wieder unmittelbar nach einem spürbaren Abbau der Schwefelsäurekonzentration im Abgas aufgenommen. Es kann aber ein erneuter Entschwefelungsprozeß eingeleitet werden, der dann aber nicht als Fortsetzung des zuvor initiierten Prozesses, sondern als eigenständiger Prozeß anzusehen ist. Gegebenenfalls muß zuvor erneut eine Erwärmung des LNT vorgenommen werden.

Vorteilhaft sind auch Varianten des Verfahrens, bei denen die Entschwefelung des LNT beendet wird, sobald die momentane Temperatur $T_{LNT}$ einen vorgebaren Grenzwert $T_{LNT,limited}$ überschreitet. Bei dieser Verfahrensvariante wird der unterstöchiometrische Betrieb der Brennkraftmaschine zur Entschwefelung des LNT unabhängig von der Schwefelsäurekonzentration im Abgas beendet, sobald eine festgelegte Grenztemperatur im LNT überschritten wird.

Vorteilhaft sind Ausführungsformen des Verfahrens, bei denen die Erwärmung des Partikelfilters durch eine Erhöhung der Abgastemperatur realisiert wird, wobei die Erhöhung der Abgastemperatur durch innermotorische Maßnahmen erzielt wird.

Innermotorische Maßnahmen können nicht nur zur Anreicherung des Abgases mit Reduktionsmittel, sondern auch zur Erwärmung - insbesondere des Partikelfilters - herangezogen werden. Eine innermotorische Maßnahme zur Erhöhung der Abgastemperatur ist beispielsweise die gezielte Umgehung eines im Ansaugtrakt vorgesehenen Ladeluftkühlers, wodurch die Temperatur der Zylinderfrischladung angehoben wird. Mit einer Reduzierung des Sauerstoffüberschusses der Zylinderfrischladung kann die Abgastemperatur ebenfalls erhöht werden.

Vorteilhaft sind dabei auch Ausführungsformen des Verfahrens, bei denen die Erhöhung der Abgastemperatur durch mindestens eine Nacheinspritzung von Kraftstoff - als innermotorischer Maßnahme - in den mindestens einen Zylinder realisiert wird. Dadurch, daß der Verbrennung mehr Kraftstoff zur Verfügung gestellt wird, wird auch mehr Energie bei der chemischen Umsetzung des Kraftstoffes freigesetzt, die dann zur Erwärmung der Verbrennungsgase herangezogen wird bzw. dient.

Vorteilhaft sind auch Ausführungsformen des Verfahrens, bei denen die Erhöhung der Abgastemperatur durch eine Rückführung von Abgas (AGR) - als innermotorischer Maßnahme - realisiert wird. Die heißen, in den Brennraum zurückgeführten Abgase erhöhen die Temperatur der Zylinderfrischladung. Zudem wird die Sauerstoffkonzentration der Zylinderladung reduziert d. h. der Betrieb der Brennkraftmaschine wird durch die Rückführung heißen Abgases gewissermaßen angefettet.

Vorteilhaft sind bei Dieselmotoren des weiteren Ausführungsformen des Verfahrens, bei denen die Erhöhung der Abgastemperatur durch eine verstärkte Drosselung im Ansaugtrakt des Dieselmotors realisiert wird.

Vorteilhaft sind ebenfalls Ausführungsformen des Verfahrens, bei denen die Erhöhung der Abgastemperatur dadurch realisiert wird, daß die Brennkraftmaschine unterstöchiometrisch ($\lambda < 1$) betrieben wird.

Vorteilhaft sind auch Ausführungsformen des Verfahrens, bei denen die Erhöhung der Abgastemperatur dadurch realisiert wird, daß Kraftstoff in die mindestens eine Abgasleitung stromaufwärts des Partikelfilters eingebracht und oxidiert wird. Diese Variante bietet Vorteile hinsichtlich der Methankonzentration im Abgas der Brennkraftmaschine. Untersuchungen haben nämlich gezeigt, daß innermotorische Maßnahmen zur Anreicherung des Abgases mit Reduktionsmittel oder zur Erwärmung des Abgases, insbesondere also ein unterstöchiometrischer Betrieb der Brennkraftmaschine, zu hohen Konzentrationen an Methan führen.

Im folgenden wird die Erfindung anhand einer Verfahrensvariante gemäß den Figuren 1 bis 3 näher beschrieben. Hierbei zeigt:

Fig. 1 die Vorgehensweise bei der Entschwefelung des Speicherkatalysators (LNT) und der Regeneration des Filters (DPF) gemäß einem Verfahren aus dem Stand der Technik,

Fig. 2 ein Beispiel für den funktionalen Zusammenhang $\Delta t_{DPF}$ ($dm_{soot}/dt$) zwischen der vorzugebenden Zeitspanne $\Delta t_{DPF}$ und der momentanen Filterregenerationsrate $dm_{soot}/dt$, und

Fig. 3 eine erste Ausführungsform des Verfahrens in Gestalt eines Flußdiagramms.

Figur 1 zeigt schematisch die Vorgehensweise bei der Entschwefelung des Speicherkatalysators (LNT) und der Regeneration des Filters (DPF) gemäß einem herkömmlichen Verfahren aus dem Stand der Technik. Figur 1 wurde bereits weiter oben im Zusammenhang mit der Beschreibung des Standes der Technik näher erörtert.

Figur 2 zeigt ein Beispiel für den funktionalen Zusammenhang $\Delta t_{DPF}$ ($dm_{soot}/dt$) zwischen der vorzugebenden Zeitspanne $\Delta t_{DPF}$ und der momentanen Filterregenerationsrate $dm_{soot}/dt$, wie er bei dem erfindungsgemäßen Verfahren Verwendung finden kann.

Auf der Ordinate ist die vorzugebende Zeitspanne $\Delta t_{DPF}$ in Sekunden [s] und auf der Abszisse die Regenerationsrate $dm_{soot}/dt$ in Gramm pro Sekunden [g/s] aufgetragen.

Die vorzugebende Regenerationsdauer $\Delta t_{DPF}$ ist keine feste Größe, sondern variabel ausgestaltet. Die Dauer $\Delta t_{DPF}$ für den überstöchiometrischen Betrieb ($\lambda > 1$) der Brennkraftmaschine zur Filterregeneration wird in Abhängigkeit von der jeweils momentan vorliegenden Regenerationsrate $dm_{soot}/dt$ festgelegt. Dabei werden die Regenerationsphasen $\Delta t_{DPF}$ bei hohen Regenerationsraten $dm_{soot}/dt$ tendenziell länger gewählt, um auf diese Weise eine hohe Regenerationsrate $dm_{soot}/dt$ für eine möglichst lange Zeitspanne $\Delta t_{DPF}$ nutzen zu können.

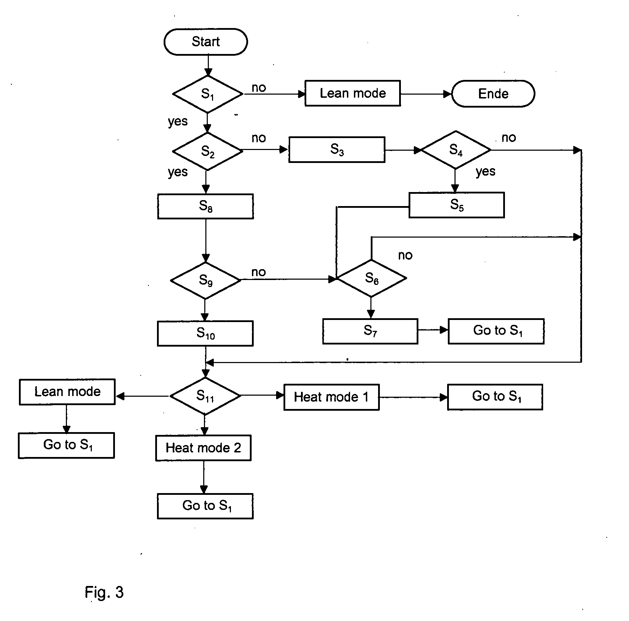

Figur 3 zeigt eine erste Ausführungsform des Verfahrens in Gestalt eines Flußdiagramms.

Nach dem Start d. h. zu Beginn wird in einem ersten Schritt (S1) des Verfahren überprüft, ob eine Anforderung zur kombinierten Regeneration (deSoot) des Partikelfilters (DPF) und Entschwefelung (deSO$_x$) des Speicherkatalysators (LNT) vorliegt. Liegt eine solche Anforderung nicht vor, wird die Brennkraftmaschine in einen überstöchiometrischen Betrieb ($\lambda > 1$ / LEAN MODE) überführt bzw. weiter mager betrieben.

Soll hingegen eine Regeneration des Partikelfilters in Kombination mit einer Entschwefelung des Speicherkatalysators durchgeführt werden, wird in einem zweiten Schritt (S2) festgestellt, ob die Brennkraftmaschine momentan überstöchiometrisch ($\lambda > 1$) oder unterstöchiometrisch ($\lambda < 1$) betrieben wird.

Liegt ein überstöchiometrischer Betrieb der Brennkraftmaschine vor, wird in einem dritten Verfahrensschritt (S3) ein Zeitnehmer, welcher die Dauer $t_{DPF}$ des überstöchiometrischen Betriebs ($\lambda > 1$) der Brennkraftmaschine erfaßt, inkrementiert und die Regeneration des Filters eingeleitet.

Im Rahmen eines vierten Verfahrensschrittes (S4) wird überprüft, ob der überstöchiometrische Betrieb

($\lambda > 1$) der Brennkraftmaschine länger oder kürzer aufrechterhalten wurde als von einer zur Filterregeneration vorgegebenen Zeitspanne $\Delta t_{DPF}$ gefordert. D. h. es wird festgestellt, ob die Brennkraftmaschine so lange überstöchiometrisch betrieben wurde, wie zuvor festgelegt, nämlich mindestens für die vorgegebene Zeitspanne $\Delta t_{DPF}$.

Ist dies der Fall, wurde die Filterregeneration in der zuvor festgelegten Weise d. h. in der vorgegebenen Länge $\Delta t_{DPF}$ durchgeführt und ein Zeitnehmer, welcher die Dauer des unterstöchiometrischen Betriebs ($\lambda < 1$) der Brennkraftmaschine erfaßt, in einem fünften Schritt (S5) auf Null gesetzt

Anschließend wird in einem sechsten Schritt (S6) anhand verschiedener Kriterien überprüft, ob die Brennkraftmaschine zum Zwecke einer Entschwefelung des Speicherkatalysators überhaupt in einen unterstöchiometrischen Betrieb überführt werden kann oder aber Gründe vorliegen, die einen unterstöchiometrischen Betrieb der Brennkraftmaschine bzw. eine Entschwefelung nicht gestatten. Im sechsten Verfahrensschritt (S6) wird somit auch überprüft, ob die Vorraussetzungen für die Einleitung einer Entschwefelung vorliegen.

Es kann dabei beispielsweise überprüft werden, ob ein unterstöchiometrischer Betrieb grundsätzlich möglich ist oder aber der momentane Betrieb der Brennkraftmaschine - beispielsweise die Last- und/oder Drehzahlanforderung des Fahrers - dem entgegen stehen. Des weiteren können Anforderungen an den Betrieb der Brennkraftmaschine vorliegen, die Vorrang vor einer Entschwefelung haben, beispielsweise bei einem Kaltstart der Brennkraftmaschine.

Des weiteren kann überprüft werden, ob die vorliegende Beladung des Filters unterhalb eines vorgegebenen Grenzwertes liegt und/oder ob sich die Temperatur des LNT in dem für die Entschwefelung geeigneten Temperaturfenster befindet d. h. ob der Speicherkatalysator einerseits ausreichend erwärmt ist, andererseits aber nicht zu heiß ist und durch Einleitung einer Entschwefelung thermisch geschädigt werden könnte.

Wird im sechsten Verfahrensschritt (S6) festgestellt, daß die Brennkraftmaschine unterstöchiometrisch betrieben werden kann, wird die Brennkraftmaschine in einem siebten Verfahrensschritt (S7) in den fetten d.h. unterstöchiometrischen Betrieb überführt und das Verfahren wird ausgehend vom ersten Verfahrensschritt (S1) fortgeführt.

Andernfalls d.h. für den Fall, daß die Brennkraftmaschine nicht unterstöchiometrisch betrieben werden kann, wird mit dem elften Verfahrensschritt (S11) fortgefahren, auf den weiter unten noch eingegangen werden wird.

Mit dem elften Verfahrensschritt (S11) wird auch fortgefahren, falls im Rahmen des vierten Verfahrensschrittes (S4) festgestellt wird, daß der überstöchiometrische Betrieb ($\lambda > 1$) der Brennkraftmaschine zur Filterregeneration nicht solange aufrechterhalten wurde wie vorgegeben, nämlich mindestens für die Dauer $\Delta t_{DPF}$. Der Abbruch d. h. die vorzeitige Beendigung des überstöchiometrischen Betriebes der Brennkraftmaschine kann dabei unterschiedliche Ursachen haben, beispielsweise die Anforderung, daß die Brennkraftmaschine - aufgrund einer übergeordneten Zielsetzung - unterstöchiometrisch zu betreiben ist.

Im Rahmen des elften Verfahrensschrittes (S11) wird überprüft, ob sich die Temperatur des kombinierten Abgasnachbehandlungssystems - umfassend einen Partikelfilter und einen Speicherkatalysator - in dem zur Durchführung des Verfahrens erforderlichen Temperaturfenster befindet, insbesondere, ob die Temperatur nicht zu hoch ist d. h. ob der Speicherkatalysator nicht zu heiß ist und gilt $T_{LNT} < T_{LNT,limited}$. Ist der Speicherkatalysator zu heiß, wird die Brennkraftmaschine in den mageren Betrieb ($\lambda > 1$) überführt und das Verfahren ausgehend vom ersten Verfahrensschritt (S1) fortgeführt.

Im Rahmen des elften Verfahrensschrittes (S11) wird auch überprüft, ob die Temperatur des kombinierten Abgasnachbehandlungssystems umfassend einen Partikelfilter und einen Speicherkatalysator die erforderliche Temperatur d. h. die Regenerationstemperatur des Filters erreicht hat mit $T_{DPF} \geq T_{threshold,DPF}$.

Ist dies der Fall, wird das Verfahren ebenfalls ausgehend vom ersten Verfahrensschritt (S1) fortgeführt. Gegebenenfalls wird die Brennkraftmaschine vorher in einen überstöchiometrischen ($\lambda > 1$) Betrieb überführt, der mit HEAT MODE 2 bezeichnet ist und der dadurch gekennzeichnet ist, daß das Abgas maximal erwärmt wird und eine geringe Konzentration an unverbrannten Kohlenwasserstoffen im Abgas vorliegt.

Ist dies nicht der Fall, wird das Verfahren ebenfalls ausgehend vom ersten Verfahrensschritt (S1) fortgeführt. Gegebenenfalls wird die Brennkraftmaschine vorher in einen überstöchiometrischen ($\lambda > 1$) Betrieb überführt, der mit HEAT MODE 1 bezeichnet ist und der dadurch gekennzeichnet ist, daß das Abgas maximal erwärmt wird, eine geringe Konzentration an unverbrannten Kohlenwasserstoffen im Abgas vorliegt und sich eine vergleichsweise geringe Ölverdünnung einstellt.

Ausgehend vom ersten Verfahrensschritt (S1) wird im folgenden der andere, verbleibende Verfahrenszweig erörtert.

Soll gemäß dem ersten Schritt (S1) eine Regeneration des Partikelfilters in Kombination mit einer Entschwefelung des Speicherkatalysators durchgeführt werden und im zweiten Verfahrensschritt (S2) wird festgestellt, daß die Brennkraftmaschine momentan unterstöchiometrisch ($\lambda < 1$) betrieben wird, wird in einem achten Verfahrensschritt (S8) ein Zeitnehmer, welcher die Dauer des unterstöchiometrischen Betriebs ($\lambda < 1$) der Brennkraftmaschine erfaßt, inkrementiert und die Entschwefelung des Speicherkatalysators eingeleitet.

Im Rahmen eines neunten Verfahrensschrittes (S9) wird überprüft, ob der unterstöchiometrische Betrieb

($\lambda$ < 1) der Brennkraftmaschine länger oder kürzer aufrechterhalten wurde als von einer zur Entschwefelung vorgegebenen Zeitspanne $\Delta t_{LNT}$ gefordert. D. h. es wird festgestellt, ob die Brennkraftmaschine so lange unterstöchiometrisch betrieben wurde, wie zuvor festgelegt, nämlich mindestens für die vorgegebene Zeitspanne $\Delta t_{LNT}$.

Ist dies nicht der Fall, wird das Verfahren mit dem sechsten Schritt (S6) fortgeführt. Der Abbruch d. h. die vorzeitige Beendigung des unterstöchiometrischen Betriebes der Brennkraftmaschine kann dabei unterschiedliche Ursachen haben, beispielsweise das Überschreiten einer maximal zulässigen Grenztemperatur $T_{LNT,limited}$.

Andernfalls wurde die Entschwefelung in der zuvor festgelegten Weise d. h. in der vorgegebenen Länge $\Delta t_{LNT}$ durchgeführt und der Zeitnehmer, welcher die Dauer des überstöchiometrischen Betriebs ($\lambda$ > 1) der Brennkraftmaschine erfaßt, in einem zehnten Schritt (S10) auf Null gesetzt. Das Verfahren wird mit dem elften Schritt (S11) fortgeführt.

## Bezugszeichen

| | |
|---|---|
| AGR | Abgasrückführung |
| $CH_4$ | Methan |
| CO | Kohlenmonoxid |
| $CO_2$ | Kohlenstoffdioxid |
| $deNO_x$ | Reinigung des Speicherkatalysators |
| deSoot | Regeneration des Partikelfilters |
| $deSO_x$ | Desulfurisation, Entschwefelung |
| $dm_{soot}/dt$ | Filterregenerationsrate, Rußumsatzrate während der Regeneration |
| $dm_s/dt$ | Schwefelumwandlungsrate im LNT während der Entschwefelung |
| HC | unverbrannte Kohlenwasserstoffe |
| $H_2O$ | Wasser |
| $H_2S$ | Schwefelsäure |
| $N_2$ | Stickstoffdioxid |
| $NO_x$ | Stickoxide |
| LNT | Lean $NO_x$ Trap, Speicherkatalysator |
| $m_{soot}$ | Rußmasse des beladenen Partikelfilters, Rußbeladung |
| $m_s$ | Schwefelmasse bzw. Schwefelmenge des beladenen Speicherkatalysators |
| S | Schwefel |
| SCR | Selective Catalytic Reduction |
| $SO_x$ | Schwefeloxide |
| $SO_2$ | Schwefeldioxid |
| $\Delta t_{DPF}$ | vorgegebene Zeitspanne für den zur Filterregeneration eingeleiteten überstöchiometrischen Betrieb ($\lambda$ > 1) der Brennkraftmaschine |
| $\Delta t_{LNT}$ | vorgegebene Zeitspanne für den zur Entschwefelung eingeleiteten unterstöchiometrischen Betrieb ($\lambda$ < 1) der Brennkraftmaschine |
| $T_{DPF}$ | Temperatur des Partikelfilters |
| $T_{LNT}$ | Temperatur des Speicherkatalysators |
| $T_{LNT,limited}$ | vorgegebene Grenztemperatur für den LNT, maximal zulässige Temperatur für den LNT |
| $T_{threshold,DPF}$ | vorgegebene Mindesttemperatur für die Filterregeneration |
| $\lambda$ | Luftverhältnis |

## Patentansprüche

1. Verfahren zur kombinierten Regeneration eines Partikelfilters und Entschwefelung eines Speicherkatalysators, wobei der Partikelfilter und der Speicherkatalysator als kombiniertes Abgasnachbehandlungssystem einer Brennkraftmaschine ausgeführt sind, die mindestens einen Zylinder und mindestens eine Abgasleitung zum Abführen der Abgase aus diesem mindestens einen Zylinder aufweist und bei der das kombinierte Abgasnachbehandlungssystem zur Nachbehandlung des Abgases in der mindestens einen Abgasleitung vorgesehen ist, bei dem

   • der Partikelfilter auf eine vorgebbare Temperatur $T_{threshold,DPF}$ erwärmt wird, falls die momentane Temperatur $T_{DPF}$ des Partikelfilters kleiner ist als diese vorgegebene Temperatur $T_{threshold,DPF}$, und anschließend
   • im Rahmen einer Filterregeneration zumindest ein Teil des im Partikelfilter gesammelten Rußes bei einem überstöchiometrischen Betrieb der Brennkraftmaschine oxidiert wird, und anschließend
   • im Rahmen einer Entschwefelung des Speicherkatalysators das Abgas bei einem unterstöchiometrischen Betrieb der Brennkraftmaschine mit nur unvollständig oxidierten Verbrennungsprodukten, insbesondere unverbrannten Kohlenwasserstoffen und Kohlenmonoxid, angereichert wird, um den im Speicherkatalysator gesammelten und befindlichen Schwefel zu konvertieren,

   **dadurch gekennzeichnet, daß**

   • der zur Entschwefelung eingeleitete unterstöchiometrische Betrieb der Brennkraftmaschine für eine vorgegebene Zeitspanne $\Delta t_{LNT}$ aufrechterhalten wird, wobei diese Zeitspanne $\Delta t_{LNT}$ als Funktion einer Schwefelumwandlungsrate $dm_s/dt$ vorgegeben wird.

2. Verfahren nach Anspruch 1, **dadurch gekennzeichnet, daß**

• der zur Filterregeneration eingeleitete überstöchiometrische Betrieb der Brennkraftmaschine für eine vorgegebene Zeitspanne $\Delta t_{DPF}$ aufrechterhalten wird, wobei diese Zeitspanne $\Delta t_{DPF}$ als Funktion einer Filterregenerationsrate $dm_{soot}/dt$ vorgegeben wird.

3. Verfahren nach Anspruch 1 oder 2, **dadurch gekennzeichnet, daß** die Konzentration der während der Entschwefelung gebildeten Schwefelsäure bei der Bemessung der vorgegebenen Zeitspanne $\Delta t_{LNT}$ berücksichtigt wird.

4. Verfahren nach einem der vorherigen Ansprüche, **dadurch gekennzeichnet, daß** im Rahmen der Entschwefelung intermittierend zwischen einem überstöchiometrischen Betrieb der Brennkraftmaschine und einem unterstöchiometrischen Betrieb gewechselt wird.

5. Verfahren nach einem der vorherigen Ansprüche, **dadurch gekennzeichnet, daß** die Entschwefelung des Speicherkatalysators beendet wird, sobald die Konzentration der während der Entschwefelung gebildeten Schwefelsäure im Abgas einen vorgebaren Grenzwert $(H_2S)_{limited}$ überschreitet.

6. Verfahren nach einem der vorherigen Ansprüche, **dadurch gekennzeichnet, daß** die Entschwefelung des Speicherkatalysators beendet wird, sobald die momentane Temperatur $T_{LNT}$ einen vorgebaren Grenzwert $T_{LNT,limited}$ überschreitet.

7. Verfahren nach einem der vorherigen Ansprüche, **dadurch gekennzeichnet, daß** die Erwärmung des Partikelfilters durch eine Erhöhung der Abgastemperatur realisiert wird, wobei die Erhöhung der Abgastemperatur durch innermotorische Maßnahmen erzielt wird.

8. Verfahren nach Anspruch 7, **dadurch gekennzeichnet, daß** die Erhöhung der Abgastemperatur durch mindestens eine Nacheinspritzung von Kraftstoff - als innermotorischer Maßnahme - in den mindestens einen Zylinder realisiert wird.

9. Verfahren nach Anspruch 7 oder 8, **dadurch gekennzeichnet, daß** die Erhöhung der Abgastemperatur durch eine Rückführung von Abgas - als innermotorischer Maßnahme - realisiert wird.

10. Verfahren nach einem der Ansprüche 7 bis 9 zum Betreiben eines Dieselmotors, **dadurch gekennzeichnet, daß** die Erhöhung der Abgastemperatur durch eine verstärkte Drosselung im Ansaugtrakt des Dieselmotors - als innermotorischer Maßnahme - realisiert wird.

11. Verfahren nach einem der Ansprüche 7 bis 10, **dadurch gekennzeichnet, daß** die Erhöhung der Abgastemperatur dadurch realisiert wird, daß die Brennkraftmaschine unterstöchiometrisch betrieben wird.

**Claims**

1. Method for the combined regeneration of a particulate filter and desulphurization of a storage catalytic converter, with the particulate filter and the storage catalytic converter being embodied as a combined exhaust-gas aftertreatment system of an internal combustion engine which has at least one cylinder and at least one exhaust line for discharging the exhaust gases out of said at least one cylinder, and in which the combined exhaust-gas aftertreatment system for the aftertreatment of the exhaust gas is provided in the at least one exhaust line, in which

   • the particulate filter is heated to a predefinable temperature $T_{threshold,DPF}$ if the instantaneous temperature $T_{DPF}$ of the particulate filter is lower than said predefined temperature $T_{threshold,DPF}$, and subsequently,
   • during a filter regeneration, at least a part of the soot which is collected in the particulate filter is oxidized in a superstoichiometric operating mode of the internal combustion engine, and subsequently,
   • during a desulphurization of the storage catalytic converter, the exhaust gas is enriched, in a substoichiometric operating mode of the internal combustion engine, with only incompletely oxidized combustion products, in particular unburned hydrocarbons and carbon monoxide, in order to convert the sulphur which has collected and is situated in the storage catalytic converter,

   **characterized in that**

   • the substoichiometric operating mode of the internal combustion engine which is initiated for desulphurization is sustained for a predefined time period $\Delta t_{LNT}$, with said time period $\Delta t_{LNT}$ being predefined as a function of a sulphur conversion rate $dm_s/dt$.

2. Method according to Claim 1, **characterized in that**

   • the superstoichiometric operating mode of the internal combustion engine which is initiated for filter regeneration is sustained for a predefined time period $\Delta t_{DPF}$, with said time period $\Delta t_{DPF}$ being predefined as a function of a filter regeneration rate $dm_{soot}/dt$.

**3.** Method according to Claim 1 or 2, **characterized in that** the concentration of the sulphuric acid formed during the desulphurization is taken into consideration in the dimensioning of the predefined time period $\Delta t_{LNT}$.

**4.** Method according to one of the preceding claims, **characterized in that**, during the desulphurization, the internal combustion engine is intermittently switched between a superstoichiometric operating mode and a substoichiometric operating mode.

**5.** Method according to one of the preceding claims, **characterized in that** the desulphurization of the storage catalytic converter is ended when the concentration of the sulphuric acid, formed during the desulphurization, in the exhaust gas exceeds a predefinable limit value $(H_2S)_{limited}$.

**6.** Method according to one of the preceding claims, **characterized in that** the desulphurization of the storage catalytic converter is ended when the instantaneous temperature $T_{LNT}$ exceeds a predefinable limit value $T_{LNT,limited}$.

**7.** Method according to one of the preceding claims, **characterized in that** the heating of the particulate filter is realized by means of an increase in the exhaust-gas temperature, with the increase in the exhaust-gas temperature being obtained by means of engine-internal measures.

**8.** Method according to Claim 7, **characterized in that** the increase in the exhaust-gas temperature is realized by means of at least one post-injection of fuel - as an engine-internal measure - into the at least one cylinder.

**9.** Method according to Claim 7 or 8, **characterized in that** the increase in the exhaust-gas temperature is realized by means of a recirculation of exhaust gas - as an engine-internal measure.

**10.** Method according to one of Claims 7 to 9 for operating a diesel engine, **characterized in that** the increase in the exhaust-gas temperature is realized by means of intensified throttling in the intake section of the diesel engine - as an engine-internal measure.

**11.** Method according to one of Claims 7 to 10, **characterized in that** the increase in the exhaust-gas temperature is realized **in that** the internal combustion engine is operated sub-stoichiometrically.

**Revendications**

**1.** Procédé pour la régénération combinée d'un filtre à particules à la désulfuration d'un catalyseur à accumulation, le filtre à particules et le catalyseur à accumulation étant réalisés sous forme de système de post-traitement des gaz d'échappement combiné d'un moteur à combustion interne, qui présente au moins un cylindre et au moins une conduite de gaz d'échappement pour l'évacuation des gaz d'échappement hors de cet au moins un cylindre et dans lequel le système de post-traitement des gaz d'échappement combiné est prévu pour le post-traitement des gaz d'échappement dans l'au moins une conduite de gaz d'échappement, dans lequel :

- le filtre à particules est chauffé à une température prédéfinissable $T_{threshold,DPF}$, si la température instantanée $T_{DPF}$ du filtre à particules est inférieure à cette température prédéfinie $T_{threshold,DPF}$ et ensuite
- dans le cadre d'une régénération du filtre, au moins une partie de la suie accumulée dans le filtre à particules est oxydée en cas de fonctionnement sur-stoechiométrique du moteur à combustion interne, et ensuite
- dans le cadre d'une désulfuration du catalyseur à accumulation, le gaz d'échappement est enrichi, en cas de fonctionnement sous-stoechiométrique du moteur à combustion interne, avec des produits de combustion n'ayant été oxydés que partiellement, notamment des hydrocarbures non brûlés et du monoxyde de carbone, afin de convertir le soufre accumulé et se trouvant dans le catalyseur à accumulation,

**caractérisé en ce que**

- le fonctionnement sous-stoechiométrique du moteur à combustion interne amorcé pour la désulfuration est maintenu pendant un intervalle de temps prédéterminé $\Delta t_{LNT}$, cet intervalle de temps $\Delta t_{LNT}$ étant prédéfini en tant que fonction d'un taux de conversion de soufre $dm_s/dt$.

**2.** Procédé selon la revendication 1, **caractérisé en ce que**

- le fonctionnement sur-stoechiométrique du moteur à combustion interne amorcé pour la régénération du filtre à particules est maintenu pendant un intervalle de temps prédéterminé $\Delta t_{DPF}$, cet intervalle de temps $\Delta t_{DPF}$ étant prédéfini en tant que fonction d'un taux de régénération du filtre $dm_{soot}/dt$.

**3.** Procédé selon la revendication 1 ou 2, **caractérisé en ce que** la concentration d'acide sulfurique formé pendant la désulfuration est prise en compte lors de la mesure de l'intervalle de temps prédéterminé $\Delta t_{LNT}$.

**4.** Procédé selon l'une quelconque des revendications précédentes, **caractérisé en ce que** dans le cadre de la désulfuration, on alterne de manière intermittente entre un fonctionnement sur-stoechiométrique du moteur à combustion interne et un fonctionnement sous-stoechiométrique.

**5.** Procédé selon l'une quelconque des revendications précédentes, **caractérisé en ce que** la désulfuration du catalyseur à accumulation est terminée dès que la concentration du gaz d'échappement en acide sulfurique formé pendant la désulfuration dépasse une valeur limite prédéfinissable $(H_2S)_{limited}$ .

**6.** Procédé selon l'une quelconque des revendications précédentes, **caractérisé en ce que** la désulfuration du catalyseur à accumulation est terminée dès que la température instantanée $T_{LNT}$ dépasse une valeur limite prédéfinissable $T_{LNT,limited}$.

**7.** Procédé selon l'une quelconque des revendications précédentes, **caractérisé en ce que** le chauffage du filtre à particules est réalisé par une augmentation de la température des gaz d'échappement, l'augmentation de la température des gaz d'échappement étant réalisée par des mesures internes au moteur.

**8.** Procédé selon la revendication 7, **caractérisé en ce que** l'augmentation de la température des gaz d'échappement est réalisée par au moins une post-injection de carburant - sous forme de mesure interne au moteur - dans l'au moins un cylindre.

**9.** Procédé selon la revendication 7 ou 8, **caractérisé en ce que** l'augmentation de la température des gaz d'échappement est réalisée par une recirculation de gaz d'échappement en tant que mesure interne au moteur.

**10.** Procédé selon l'une quelconque des revendications 7 à 9, pour le fonctionnement d'un moteur diesel, **caractérisé en ce que** l'augmentation de la température des gaz d'échappement est réalisée par un étranglement accru dans le conduit d'admission du moteur diesel, en tant que mesure interne au moteur.

**11.** Procédé selon l'une quelconque des revendications 7 à 10, **caractérisé en ce que** l'augmentation de la température des gaz d'échappement est réalisée **en ce que** le moteur à combustion interne est utilisé en mode sous-stoechiométrique.

Fig. 1

EP 1 873 365 B1

Fig. 2

Start

S₁ — no → Lean mode → Ende

yes

S₂ — no → S₃ → S₄ — no →

yes

S₈

S₄ yes → S₅

S₉ — no → S₆ — no →

yes

S₁₀

S₆ → S₇ → Go to S₁

Lean mode ← S₁₁ → Heat mode 1 → Go to S₁

Go to S₁

Heat mode 2

Go to S₁

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020178716 A1